# FASCICULE DE BREVET EUROPEEN

(11) **EP 3 717 309 B1**
(45) Date de publication et mention de la délivrance du brevet: **14.02.2024**
(21) Numéro de dépôt: 18804335.0
(22) Date de dépôt: 23.11.2018
(51) Int. Cl.: B60R 16/027, B60J 5/04, B60J 5/06, H01R 13/08, H01R 13/14, H01R 13/24, H01R 13/28

(54) **AGENCEMENT D'UN VÉHICULE, DISPOSITIF DE CONNEXION ÉLECTRIQUE ET VÉHICULE ÉQUIPÉ D'UN TEL DISPOSITIF**
ANORDNUNG EINES FAHRZEUGS, ELEKTRISCHE VERBINDUNGSVORRICHTUNG UND FAHRZEUG MIT EINER SOLCHEN VORRICHTUNG
ARRANGEMENT OF A VEHICLE, ELECTRICAL CONNECTION DEVICE, AND VEHICLE EQUIPPED WITH SUCH A DEVICE

(30) Priorité: 01.12.2017 FR 1761548
(43) Date de publication de la demande: 07.10.2020
(73) Titulaire: Renault s.a.s, 92100 Boulogne Billancourt (FR)
(72) Inventeur: COLIN, Thierry, 28500 Cherisy (FR)
(74) Mandataire: Renault Group
(86) Numéro de dépôt international: PCT/EP2018/082413
(87) Numéro de publication internationale: WO 2019/105865

(56) Documents cités:
- EP-A1- 2 902 227
- DE-A1- 19 923 706
- DE-B3-102004 013 357
- FR-A- 1 122 299
- FR-A1- 3 014 824
- JP-A- 2002 193 052
- US-A1- 2011 250 801
- US-A1- 2014 077 523
- US-B1- 6 332 781
- US-B2- 8 484 900

## Description

La présente invention concerne un agencement d'un véhicule, notamment une automobile, un dispositif de connexion électrique ainsi qu'un véhicule équipé d'un tel dispositif.

Elle s'adresse plus particulièrement mais non limitativement à l'agencement d'un dispositif de connexion électrique sur des premier et second éléments articulés de type porte. Les premier et second éléments articulés sont respectivement une porte latérale avant de type battante et une porte latérale de type coulissante.

Il est bien connu d'intégrer des équipements électriques dans un véhicule, par exemple des haut-parleurs, un lève-vitre ou une serrure à commande électrique à l'intérieur d'une porte d'un véhicule automobile. Afin de relier chacun des équipements embarqués dans une porte au faisceau de bord du véhicule, il est connu d'utiliser un dispositif de connexion approprié constitué d'une partie fixe montée sur la caisse du véhicule, par exemple sur un montant latéral de l'encadrement de porte, et d'une partie complémentaire reliée électriquement aux équipements de la porte par l'intermédiaire d'un faisceau de la porte.

Selon qu'il s'agisse d'une porte battante ou d'une porte coulissante, les dispositifs de connexion connus sont de conception propre au mouvement de déplacement de la porte par rapport à la caisse du véhicule. Etant donné le déplacement de l'ouvrant en phase terminale de fermeture, le dispositif de connexion électrique pour une porte battante est de conception différente à celle d'un dispositif de connexion électrique pour une porte coulissante. Tandis qu'une porte battante suit un déplacement sensiblement en arc de cercle, une porte coulissante suit un déplacement approximativement rectiligne en phase terminale de fermeture.

Il est également connu des dispositifs de connexion électrique qui permettent une liaison électrique permanente entre le faisceau de bord et les équipements électriques embarqués dans la porte, comme cela peut être le cas pour une porte latérale coulissante. Il est connu d'utiliser un moyen de guidage d'au moins un câble qui permet de suivre les déplacements d'ouverture et de fermeture de la porte afin d'électrifier de manière permanente de la porte. Outre l'aspect coûteux d'une telle solution, l'encombrement d'un tel moyen de guidage n'est parfois pas compatible avec des contraintes de conception d'un véhicule.

Une autre solution consiste en une électrification uniquement lorsque la porte latérale coulissante est en l'état de fermeture. Il a été relevé comme inconvénient qu'une conception particulière de la caisse du véhicule peut engendrer une difficulté quant à l'intégration du dispositif de connexion électrique sur la caisse du véhicule. A titre d'exemple, certaines évolutions de conception visent à supprimer le montant central de la structure de caisse, aussi qualifié de pied milieu, afin d'augmenter l'accès à l'intérieur de l'habitacle du véhicule.

US2014/0077523 A1 divulgue une structure de connexion d'une porte arrière coulissante et une porte avant battante de véhicule. FR1122299A divulgue un accouplement de serrage multipolaire pour lignes électriques.

C'est dans cet environnement qu'est issu l'objet de l'invention. La présente invention a pour but à fournir un agencement d'un dispositif de connexion sur un véhicule dont l'architecture de caisse propose une ouverture unique pour deux portes latérales adjacentes, sans montant central de séparation.

Plus particulièrement, l'invention concerne un agencement d'un véhicule, notamment une automobile, comportant une caisse dont au moins un côté latéral comprend une ouverture pouvant être fermée par une porte latérale avant et une porte latérale arrière.

Selon l'invention, l'agencement se caractérise un dispositif de connexion électrique disposé en partie sur la porte latérale avant et en partie sur la porte latérale arrière, un tel dispositif de connexion rendant apte l'électrification de la porte latérale arrière lorsque les portes sont chacune en position de fermeture.

Selon d'autres dispositions particulières de l'agencement :
- le dispositif de connexion électrique comprend un connecteur disposé sur l'une des portes, et relié électriquement à un faisceau électrique embarqué par la porte ;
- la porte comprend un chant de porte définit par un caisson de porte, le chant de porte comportant une interface destinée à la fixation du dispositif de connexion électrique ;
- l'interface de la porte latérale avant est disposée sensiblement au regard de l'interface de la porte latérale arrière lorsque les portes sont en position de fermeture ;
- le dispositif de connexion électrique comprend des connecteurs emboîtés mutuellement l'un dans l'autre lorsque les portes sont en position de fermeture.

L'invention concerne également un dispositif de connexion électrique permettant l'agencement tel que précédemment présenté, caractérisé en ce que chaque connecteur comprend un peigne multibroches disposé en saillie hors d'une platine de fixation du connecteur à la porte, le dispositif étant destiné à rendre apte le déplacement sensiblement en arc de cercle ou approximativement rectiligne de la porte de sa position de fermeture à une position d'ouverture, et vice-et-versa.

Selon d'autres dispositions particulières du dispositif de l'invention :
- deux broches adjacentes de l'un des connecteurs délimitent un interstice rendant apte l'emboîtement d'une broche de l'autre des connecteurs, les connecteurs étant disposés en vis-à-vis de telle sorte que les peignes multibroches sont mutuellement emboîtés l'un avec l'autre afin de créer une liaison électrique des faisceaux électriques des portes lorsque les portes sont en position de fermeture ;
- au moins une broche a une face supérieure et/ou une face inférieure déformable avec un profil sensiblement convexe ;
- au moins l'un des connecteurs comprend un peigne multibroches qui est mobile à translation le long d'une direction parallèle à un plan dans lequel s'étend la platine de fixation, et un moyen d'équilibrage permettant de maintenir le peigne multibroches mobile dans une position centrale à l'intérieur d'une ouverture réalisée dans la platine.

L'invention a aussi pour objet un véhicule, notamment une automobile, comprenant une caisse dont au moins l'un des côtés de caisse comprend une unique ouverture, caractérisé en ce que le véhicule comprend un agencement conforme à ce qui précède, ou un dispositif de connexion électrique ayant les caractéristiques susmentionnées, la porte latérale avant étant du type d'une porte battante, la porte latérale arrière étant du type d'une porte latérale coulissante.

D'autres caractéristiques et avantages apparaîtront dans la description qui va être faite d'un véhicule automobile comportant un agencement et/ou un dispositif de connexion électrique conforme à l'invention.

On se reportera aux dessins annexés dans lesquels :
- la figure 1 est une représentation schématique latérale d'un véhicule, dont l'un des côtés est pourvu d'une porte latérale avant battante et d'une porte latérale arrière coulissante, ici représentées en position de fermeture, selon l'invention ;
- la figure 2 représente de manière schématique et en perspective des caissons de portes équipés d'un dispositif de connexion électrique selon l'agencement de l'invention ;
- la figure 3 est un agrandissement d'une zone III de la figure 2, représentant l'agencement de l'invention ;
- la figure 4 représente selon une vue en perspective un dispositif de connexion électrique pris isolément, selon l'invention ;
- la figure 5 représente partiellement le dispositif de la figure 4, selon une vue en coupe longitudinale.

Sur l'ensemble des figures, l'axe transversal Y s'étend de la droite vers la gauche du véhicule, l'axe vertical Z s'étend du bas vers le haut, l'axe longitudinal X étant donné selon un sens normal de déplacement du véhicule et vers l'avant. Les termes « haut » et « bas » ou « supérieur » et « inférieur » se rapportent à une orientation d'axe vertical Z. Pour ne pas alourdir les figures, les références numériques ne sont pas reproduites sur toutes les figures illustrant l'objet de l'invention.

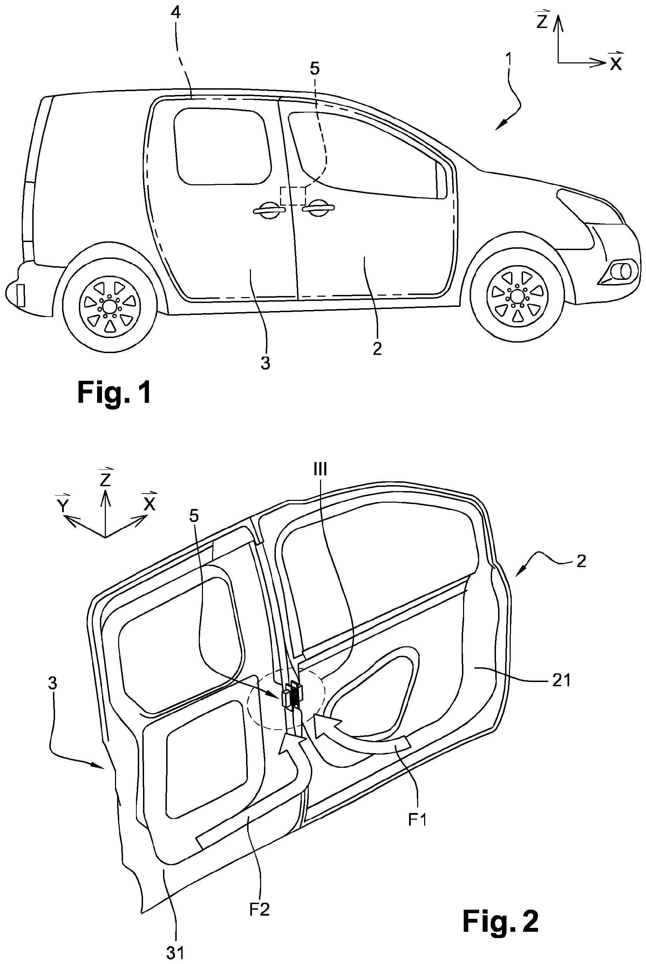

Sur le dessin de la figure 1, on a représenté un véhicule 1 vu du côté droit, comportant deux portières latérales 2, 3 fermant une unique ouverture 4 dont les contours sont représentés en traits mixtes. Le véhicule 1 comprend une porte latérale avant 2, qui est montée à rotation sur la caisse du véhicule, et une porte latérale arrière 3 montée à coulissement sur la caisse.

Le véhicule 1 peut être un véhicule utilitaire comportant une porte latérale arrière 3 qui est une porte pleine équipée d'au moins un équipement électrique, telle qu'une serrure à commande électrique.

Le véhicule 1 peut être un véhicule de tourisme comportant une porte latérale arrière 3 qui est une porte vitrée équipée d'au moins des équipements électriques choisi parmi un lève-vitre à commande électrique, une serrure à commande électrique, et un haut-parleur.

La porte latérale arrière 3 comprend un faisceau électrique, relié à des équipements électriques, qui doit être électriquement connecté au faisceau électrique de bord du véhicule pour les rendre opérationnel. Le véhicule 1 comprend un dispositif de connexion électrique 5 agencé sur les portes latérales avant 2 et arrière 3 rendant apte l'électrification des équipements électriques de la porte latérale arrière 3 lorsque les portes 2, 3 sont toutes deux en position de fermeture de l'ouverture 4. La mise en relation électrique de la porte latérale arrière 3 au faisceau électrique de bord du véhicule s'opère ainsi par l'intermédiaire du faisceau électrique de la porte latérale avant 2.

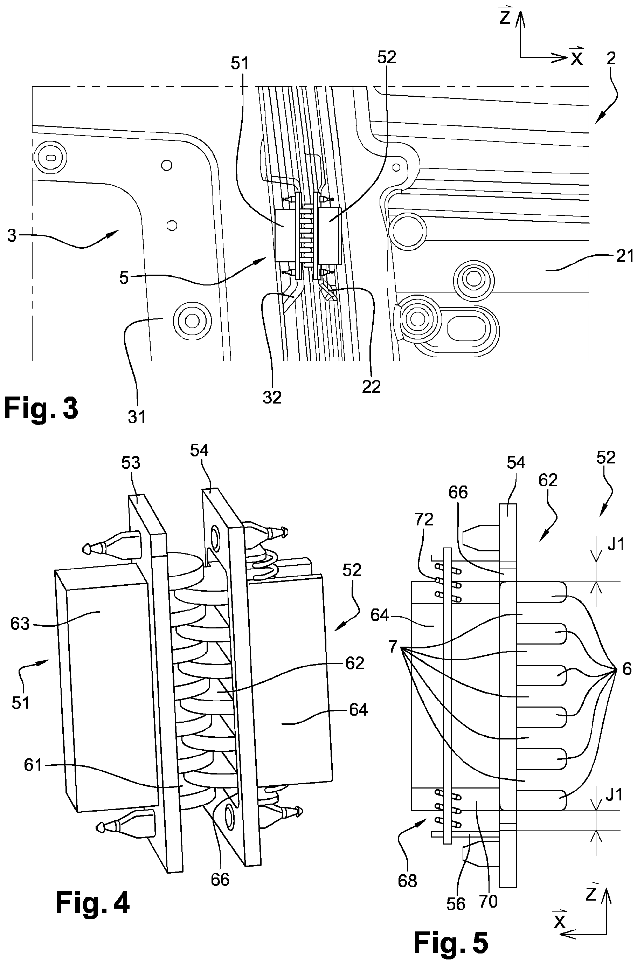

Pour ce faire, le dispositif de connexion électrique 5 comprend des premier et second connecteurs 51, 52, chacun étant destiné à être monté sur l'une des deux portes latérales 2, 3. Comme cela est rendu visible sur la figure 3, un premier connecteur 51 est monté directement sur le caisson 31 de porte latérale arrière 3, tandis qu'un second connecteur 52 est assemblé sur le caisson 21 de la porte latérale avant 2.

Chacun des premier et second connecteurs 51, 52 comprend une platine de fixation 53, 54 qui est destinée à venir respectivement en appui contre la face extérieure du caisson 31, 21 de porte. Le caisson 21, 31 de porte latérale avant 2 ou arrière 3 comprend une interface 22, 32 de fixation réalisée sur le chant de porte 2, 3. L'interface 22, 32 comprend un passage au travers duquel peut s'étendre transversalement le connecteur 51, 52. Ce passage est réalisé au travers d'une portion sensiblement plane de l'interface 22, 32, laquelle est adaptée à la platine de fixation 53, 54 du connecteur 51, 52.

L'interface 22, 32 est réalisée par un emboutissage dédié du caisson 21, 31 de porte.

L'interface de fixation 22, 32 comprend une partie sensiblement plane entourant le passage au travers duquel s'étend le connecteur 51, 52. La platine de fixation 53, 54 est assemblée à l'interface de fixation 22, 32 par l'intermédiaire d'un moyen de fixation rapide, par exemple de type à rivet.

Les interfaces de fixation 22, 32 sont sensiblement parallèles l'une par rapport à l'autre, de telle sorte que les platines de fixation 53, 54 sont parallèles.

Le dispositif de fixation 5 peut être verticalement situé en zone médiane de la porte, approximativement au niveau de la partie supérieure de la ceinture de caisse.

En l'absence de pied milieu, l'agencement du dispositif de connexion électrique sur le véhicule comprend un premier connecteur 51 rapporté sur la porte latérale arrière 3 coulissante, et un second connecteur 52 rapporté sur la porte latérale avant 2 battante.

Le dispositif de connexion 5 est apte à établir une liaison électrique entre ces broches 6 conductrices d'électricité lorsque les portes 2, 3 sont chacune dans leur position de fermeture. Pour ce faire, chaque premier ou second connecteur 51, 52 comprend un peigne 61, 62 multibroches dont les broches 6 sont disposées en saillie hors de la platine de fixation 53, 54.

Pour chaque connecteur 51, 52, les broches 6 qui le composent peuvent être disposées parallèlement les unes par rapport aux autres en se présentant sous la forme d'un peigne 61 ou 62 multibroches, comme cela est rendu visible sur les figures 4 et 5. Les peignes 61 et 62 multibroches sont aptes à réaliser une connexion électrique par emboîtement des broches entre elles. On entend par emboîtement, un positionnement des broches 6 de l'un des contacteurs 51, 52 à l'intérieur des interstices 7 définis par les broches de l'autre des contacteurs 51, 52, comme cela est rendu visible sur la figure 4.

Le dispositif 5 de connexion électrique est un point de liaison mécanique entre les deux portes 2, 3 en l'état de fermeture. C'est la raison pour laquelle, chaque broche 6 présente un profil sensiblement en demi-cercle, ce qui permet les déplacements respectivement de la porte 2, 3.

La porte latérale avant 2 étant articulée à rotation autour de la caisse via des charnières dédiées, les broches 6 du connecteur 52 se déplacent selon un mouvement en arc de cercle sur les broches 6 du connecteur 51 de la porte 3 fermée, durant les phases de déplacement de la porte 2 à proximité de sa position de fermeture.

La porte latérale arrière 3 étant articulée à coulissement selon un mouvement sensiblement rectiligne suivant des directions d'axes Y et X, c'est-à-dire un mouvement dont la résultante comprend une composante longitudinale et une composante transversale, les broches 6 du connecteur 51 se déplacent selon ce même mouvement sur les broches 6 du connecteur 52 de la porte 2 fermée, durant les phases de déplacement de la porte 3 à proximité de sa position de fermeture. Les flèches F1 et F2 de la figure 2 représentent respectivement le mouvement de la porte latérale avant 2 durant sa manoeuvre de fermeture et le mouvement de la porte latérale arrière 3 durant sa manoeuvre de fermeture.

Par rapport à un plan XY, chaque broche 6 peut en outre présenter une surface inférieure et supérieure déformable de telle sorte que la broche 6 correspondante du connecteur opposé est assemblé sans jeu entre deux broches adjacentes d'un même connecteur 51, 52.

Chaque broche 6 peut, selon un plan XY, présenter une face supérieure et/ou inférieure sensiblement convexe de telle sorte que l'épaisseur selon l'axe Z est plus important en son centre qu'en son bord périphérique. La partie sommitale de chaque broche 6 relativement à un axe Z est apte à se déformer de telle sorte que l'emboîtement des peignes multibroches 61 et 62 engendre en concomitance une déformation de chacune des broches 6 des connecteurs 51, 52.

Selon une variante de réalisation, chaque face supérieure ou inférieure d'une broche 6 peut présenter un profil sensiblement conique dont l'axe de révolution est sensiblement parallèle à l'axe Z. Le sommet du cône définit la partie sommitale de la broche 6 déformable.

Chaque broche 6 comprend un support réalisé en matière plastique qui entoure une âme métallique conductrice d'électricité. L'âme métallique est réalisée à partir d'une feuille d'acier déformable.

Les différents supports constituant un peigne multibroches 61, 62 peuvent être réalisés par moulage d'une matière plastique.

Le peigne multibroches 61, 62 peut être réalisé par un surmoulage des âmes métalliques conductrices d'électricité.

A titre d'exemple, le connecteur 51 est réalisé en matière plastique selon un procédé de moulage permettant de réaliser d'un seul tenant la platine de fixation 53, le peigne multibroches 61 et un boîtier 63 d'interconnexion du faisceau de porte.

Le connecteur 52 peut comprendre un moyen de compensation d'un désalignement d'axe Z avec le connecteur 51 opposé. Un tel moyen peut être réalisé par un peigne multibroches 62 réalisé d'un seul tenant avec un boîtier 64 d'interconnexion du faisceau de porte. L'ensemble alors réalisé est monté à coulissement d'axe Z sur la platine 54 qui comprend pour se faire d'une ouverture 66 au travers de laquelle s'étend l'ensemble formé du boîtier 64 et du peigne 62 multibroches. Un jeu J1 en Z permet un débattement de même axe de l'ensemble susmentionné le long de la platine 54 de fixation. La largeur de l'ouverture 66 selon l'axe Y est sensiblement identique à celle de l'ensemble susmentionné au jeu de montage près pour permettre un coulissement en Z. Un moyen d'équilibrage 68 permet de maintenir le peigne 62 multibroches dans une position centrale en ce sens que les jeux J1 supérieur et inférieur sont sensiblement identiques, comme cela est visible sur la figure 5. A titre d'exemple, le jeu J1 est compris entre 2 et 6 mm, préférentiellement le jeu est de 4 mm.

Ledit moyen d'équilibrage 68 comprend un ressort 72 intercalé entre une plaque de butée 56 solidaire de la platine de fixation 54 et une cave 70 conformée dans le boîtier 64. Préférentiellement, les parties supérieure et inférieure du boîtier 64 coopèrent respectivement avec ledit moyen d'équilibrage 68.

En combinaison avec le profil de chaque broche 6, l'insertion par emboîtement des connecteurs 51, 52 se fait sans bruit ni choc que l'on serait en droit de percevoir lorsqu'une broche vient frapper une autre broche au lieu de venir à glissement dans un interstice 7.

De manière avantageuse, ledit moyen d'équilibrage 68 rend apte l'absorption des défauts d'alignement entre broches et les interstices lors de l'emboitement 51, 52. Il permet également les débattements relatifs en Z entre les portes 2 et 3 lors du roulage du véhicule, tels qu'ils apparaissent lors du fonctionnement normal du véhicule.

L'agencement d'un véhicule automobile comportant un tel dispositif de connexion électrique rend ainsi apte l'électrification d'au moins une porte latérale 2, 3 en l'absence même d'un pied central, selon une utilisation du faisceau électrique de l'une des portes latérales pour électrifier l'autre des portes latérales.

Selon le mode de réalisation donnée à titre d'exemple, lorsque les portes latérales sont chacune en l'état de fermeture, le dispositif de connexion électrique assure l'électrification de la porte latérale arrière 3 par une utilisation du faisceau électrique de la porte latérale avant 2 qui est reliée électriquement au faisceau de bord du véhicule, de manière habituelle. Cela permet une architecture de caisse selon laquelle l'ouverture d'accès à l'intérieur du véhicule est délimitée verticalement par un pied avant et un pied arrière, horizontalement par un brancard supérieur et un bas de caisse.

A titre d'exemple, l'invention trouve une application appropriée pour un véhicule de type utilitaire où la voie d'accès entre l'intérieur et l'extérieur du véhicule pour le chargement d'objets encombrants est recherchée. Le véhicule peut également être une automobile de type berline pour laquelle l'absence de pied milieu permet un accès facilité aux rangs de sièges avant et arrière tout en préservant une électrification des divers équipements embarqués sur la porte latérale arrière 3 lorsque les portes latérales 2, 3 adjacentes sont respectivement en l'état de fermeture. Par une telle solution, la technique de conception du véhicule s'écarte d'une électrification permanente de la porte latérale arrière qui reste complexe et coûteuse dans sa mise en oeuvre.

L'agencement selon l'invention permet de nouvelles architectures de caisse tout en s'adaptant de manière simple et efficace aux contraintes de fabrication d'un véhicule, notamment à l'électrification d'une porte latérale arrière.

## Revendications

1. Agencement d'un véhicule (1), notamment une automobile, comportant une caisse dont au moins un côté latéral comprend une ouverture (4) pouvant être fermée par une porte latérale avant (2) et une porte latéral arrière (3), **caractérisé en ce qu'**il comprend un dispositif de connexion électrique (5) disposé en partie sur la porte latérale avant (2) et en partie sur la porte latérale arrière (3), un tel dispositif de connexion rendant apte l'électrification de la porte latérale arrière (3) lorsque les portes sont chacune en position de fermeture.

2. Agencement selon la revendication 1, **caractérisé en ce que** le dispositif de connexion électrique (5) comprend un connecteur (51, 52) disposé sur l'une des portes (2, 3), et relié électriquement à un faisceau électrique embarqué par la porte (2, 3).

3. Agencement selon la revendication 1 ou 2, **caractérisé en ce que** la porte (2, 3) comprend un chant de porte définit par un caisson (21, 31) de porte, le chant de porte comportant une interface (22, 32) destinée à la fixation du dispositif de connexion électrique (5).

4. Agencement selon la revendication 3, **caractérisé en ce que** l'interface (22) de la porte latérale avant (2) est disposée sensiblement au regard de l'interface (32) de la porte latérale arrière (3) lorsque les portes sont en position de fermeture.

5. Agencement selon l'une quelconque des revendications précédentes, **caractérisé en ce que** le dispositif de connexion électrique (5) comprend des connecteurs (51, 52) emboîtés mutuellement l'un dans l'autre lorsque les portes (2, 3) sont en position de fermeture.

6. Dispositif de connexion électrique (5) apte à l'agencement selon l'une quelconque des revendications 2 à 5, **caractérisé en ce que** chaque connecteur (51, 52) comprend un peigne (61, 62) multibroches disposé en saillie hors d'une platine (53, 54) de fixation du connecteur à la porte (2, 3), le dispositif étant destiné à rendre apte le déplacement sensiblement en arc de cercle ou approximativement rectiligne de la porte (2, 3) de sa position de fermeture à une position d'ouverture, et vice-et-versa.

7. Dispositif de connexion électrique (5) selon la revendication 6, **caractérisé en ce que** deux broches (6) adjacentes de l'un des connecteurs (51, 52) délimitent un interstice (7) rendant apte l'emboîtement d'une broche (6) de l'autre des connecteurs (51, 52), les connecteurs (51, 52) étant disposés en vis-à-vis de telle sorte que les peignes (61, 62) multibroches sont mutuellement emboîtés l'un avec l'autre afin de créer une liaison électrique des faisceaux électriques des portes (2, 3) lorsque les portes (2, 3) sont en position de fermeture.

8. Dispositif de connexion électrique (5) selon la revendication 6 ou 7, **caractérisé en ce qu'**au moins une broche (6) a une face supérieure et/ou une face inférieure déformable avec un profil sensiblement convexe.

9. Dispositif de connexion électrique (5) selon l'une quelconque des revendications 6 à 8, **caractérisé en ce qu'**au moins l'un des connecteurs (51, 52) comprend un peigne (62) multibroches qui est mobile à translation le long d'une direction parallèle à un plan (YZ) dans lequel s'étend la platine (54) de fixation, et un moyen d'équilibrage (68) permettant de maintenir le peigne (62) multibroches mobile dans une position centrale à l'intérieur d'une ouverture (66) réalisée dans la platine.

10. Véhicule (1), notamment une automobile, comprenant une caisse dont au moins l'un des côtés de caisse comprend une unique ouverture (4), **caractérisé en ce qu'**il comprend un agencement selon l'une quelconque des revendications 1 à 5, ou un dispositif de connexion électrique (5) selon l'une quelconque des revendications 6 à 9, la porte latérale avant (2) étant du type d'une porte battante, la porte latérale arrière (3) étant du type d'une porte latérale coulissante.

## Patentansprüche

1. Anordnung eines Fahrzeugs (1), insbesondere eines Automobils, das eine Karosserie umfasst, von der mindestens eine Längsseite eine Öffnung (4) beinhaltet, die durch eine vordere Seitentür (2) und eine hintere Seitentür (3) verschlossen werden kann, **dadurch gekennzeichnet, dass** sie eine elektrische Verbindungsvorrichtung (5) beinhaltet, die teilweise an der vorderen Seitentür (2) und teilweise an der hinteren Seitentür (3) angeordnet ist, wobei eine solche Verbindungsvorrichtung die Elektrifizierung der hinteren Seitentür (3) ermöglicht, wenn sich die Türen jeweils in der geschlossenen Position befinden.

2. Anordnung nach Anspruch 1, **dadurch gekennzeichnet, dass** die elektrische Verbindungsvorrichtung (5) einen Verbinder (51, 52) beinhaltet, der an einer der Türen (2, 3) angeordnet ist und mit einem durch die Tür (2, 3) aufgenommenen Kabelbaum elektrisch verbunden ist.

3. Anordnung nach Anspruch 1 oder 2, **dadurch gekennzeichnet, dass** die Tür (2, 3) eine Türkante beinhaltet, die durch einen Türkasten (21, 31) definiert wird, wobei die Türkante eine Verbindungsstelle (22, 32) umfasst, die zur Befestigung der elektrischen Verbindungsvorrichtung (5) bestimmt ist.

4. Anordnung nach Anspruch 3, **dadurch gekennzeichnet, dass** die Verbindungsstelle (22) der vorderen Seitentür (2) im Wesentlichen gegenüber der Verbindungsstelle (32) der hinteren Seitentür (3) angeordnet ist, wenn sich die Türen in der geschlossenen Position befinden.

5. Anordnung nach einem beliebigen der vorhergehenden Ansprüche, **dadurch gekennzeichnet, dass** die elektrische Verbindungsvorrichtung (5) Verbinder (51, 52) beinhaltet, die miteinander in Eingriff sind, wenn sich die Türen (2, 3) in der geschlossenen Position befinden.

6. Elektrische Verbindungsvorrichtung (5), die für die Anordnung nach einem beliebigen der Ansprüche 2 bis 5 geeignet ist, **dadurch gekennzeichnet, dass** jeder Verbinder (51, 52) einen mehrstiftigen Anschluss (61, 62) beinhaltet, der von einer Platte (53, 54) zur Befestigung des Verbinders an der Tür (2, 3) vorstehend angeordnet ist, wobei die Vorrichtung dazu bestimmt ist, die im Wesentlichen bogenförmige oder ungefähr geradlinige Bewegung der Tür (2, 3) von ihrer geschlossenen Position in eine geöffnete Position und umgekehrt zu ermöglichen.

7. Elektrische Verbindungsvorrichtung (5) nach Anspruch 6, **dadurch gekennzeichnet, dass** zwei benachbarte Stifte (6) von einem der Verbinder (51, 52) einen Spalt (7) begrenzen, der das In-Eingriff-Bringen eines Stifts (6) von dem anderen der Verbinder (51, 52) ermöglicht, wobei die Verbinder (51, 52) einander gegenüber angeordnet sind, sodass die mehrstiftigen Anschlüsse (61, 62) miteinander in Eingriff gebracht werden, um eine elektrische Verbindung der Kabelbäume der Türen (2, 3) zu erzeugen, wenn sich die Türen (2, 3) in der geschlossenen Position befinden.

8. Elektrische Verbindungsvorrichtung (5) nach Anspruch 6 oder 7, **dadurch gekennzeichnet, dass** mindestens ein Stift (6) eine verformbare obere und/oder untere Fläche mit einem im Wesentlichen konvexen Profil aufweist.

9. Elektrische Verbindungsvorrichtung (5) nach einem beliebigen der Ansprüche 6 bis 8, **dadurch gekennzeichnet, dass** mindestens einer der Verbinder (51, 52) einen mehrstiftigen Anschluss (62), der entlang einer Richtung, die zu einer Ebene (YZ), in der sich die Befestigungsplatte (54) erstreckt, parallel ist, translatorisch beweglich ist, und ein Ausgleichsmittel (68), das es gestattet, den beweglichen mehrstiftigen Anschluss (62) in einer mittigen Position innerhalb einer Öffnung (66) in der Platte zu halten, beinhaltet.

10. Fahrzeug (1), insbesondere ein Automobil, das eine Karosserie beinhaltet, von der mindestens die eine der Karosserieseiten eine einzige Öffnung (4) beinhaltet, **dadurch gekennzeichnet, dass** es eine Anordnung nach einem beliebigen der Ansprüche 1 bis 5 oder eine elektrische Verbindungsvorrichtung (5) nach einem beliebigen der Ansprüche 6 bis 9 beinhaltet, wobei die vordere Seitentür (2) vom Typ Flügeltür ist, wobei die hintere Seitentür (3) vom Typ Seitenschiebetür ist.

## Claims

1. Arrangement of a vehicle (1), notably a motor vehicle, comprising a body of which at least one lateral side comprises an opening (4) that can be closed by a front side door (2) and a rear side door (3), **characterized in that** it comprises an electrical connection device (5) disposed partly on the front side door (2) and partly on the rear side door (3), such a connection device allowing the electrification of the rear side door (3) when the doors are each in a closed position.

2. Arrangement according to Claim 1, **characterized in that** the electrical connection device (5) comprises a connector (51, 52) disposed on one of the doors (2, 3), and linked electrically to a wiring harness embedded in the door (2, 3).

3. Arrangement according to Claim 1 or 2, **characterized in that** the door (2, 3) comprises a door rim defined by an inner door shell (21, 31), the door rim comprising an interface (22, 32) intended for the fixing of the electrical connection device (5).

4. Arrangement according to Claim 3, **characterized in that** the interface (22) of the front side door (2) is disposed substantially facing the interface (32) of the rear side door (3) when the doors are in a closed position.

5. Arrangement according to any one of the preceding claims, **characterized in that** the electrical connection device (5) comprises connectors (51, 52) fitted mutually into one another when the doors (2, 3) are in a closed position.

6. Electrical connection device (5) suitable for the arrangement according to any one of Claims 2 to 5, **characterized in that** each connector (51, 52) comprises a multipin comb (61, 62) disposed protruding out of a plate (53, 54) for fixing the connector to the door (2, 3), the device being intended to allow the substantially circular arc-shaped or approximately rectilinear displacement of the door (2, 3) from its closed position to an open position, and vice versa.

7. Electrical connection device (5) according to Claim 6, **characterized in that** two adjacent pins (6) of one of the connectors (51, 52) delimit an interstice (7) allowing for the fitting of a pin (6) of the other of the connectors (51, 52), the connectors (51, 52) being disposed facing one another such that the multipin combs (61, 62) are mutually fitted with one another in order to create an electrical link for the wiring harnesses of the doors (2, 3) when the doors (2, 3) are in a closed position.

8. Electrical connection device (5) according to Claim 6 or 7, **characterized in that** at least one pin (6) has a top face and/or a bottom face that is deformable with a substantially convex profile.

9. Electrical connection device (5) according to any one of Claims 6 to 8, **characterized in that** at least one of the connectors (51, 52) comprises a multipin comb (62) which is translationally mobile along a direction parallel to a plane (YZ) in which the fixing plate (54) extends, and a balancing means (68) making it possible to keep the mobile multipin comb (62) in a central position inside an opening (66) produced in the plate.

10. Vehicle (1), notably a motor vehicle, comprising a body of which at least one of the body sides comprises a single opening (4), **characterized in that** it comprises an arrangement according to any one of Claims 1 to 5, or an electrical connection device (5) according to any one of Claims 6 to 9, the front side door (2) being of the swing door type, the rear side door (3) being of the sliding side door type.
